# EUROPEAN PATENT SPECIFICATION

(11) **EP 4 105 755 B1**
(45) Date of publication and mention of the grant of the patent: **09.04.2025**
(21) Application number: 22174777.7
(22) Date of filing: 23.05.2022
(51) Int. Cl.: G05D 1/00, A01B 69/04, A01M 7/00

(54) **AUTOMATIC TRAVELING METHOD, AUTOMATIC TRAVELING SYSTEM, AND AUTOMATIC TRAVELING PROGRAM**
AUTOMATISCHES FAHRVERFAHREN, AUTOMATISCHES FAHRSYSTEM, UND AUTOMATISCHES FAHRPROGRAMM
PROCÉDÉ, SYSTÈME ET PROGRAMME DE DÉPLACEMENT AUTOMATIQUE

(30) Priority: 31.05.2021 JP 2021091523
(43) Date of publication of application: 21.12.2022
(73) Proprietor: Yanmar Holdings Co., Ltd., Osaka-shi, Osaka (JP)
(72) Inventor: SUZUKI, Akihiro, Osaka (JP)
(74) Representative: Novagraaf International SA

(56) References cited:
- WO-A1-2015/119266
- JP-A- 2015 112 069
- JP-A- 2016 024 540

## Description

### TECHNICAL FIELD

The present invention relates to an automatic traveling method, an automatic traveling system, and an automatic traveling program, for causing a work vehicle to automatically travel according to a target route in a travel region.

### BACKGROUND ART

There is known a work vehicle automatically traveling on a target route while spraying a chemical liquid on crops planted in a work area such as a farm field or an agricultural farm (see, for example, Patent Document 1). The target route is generated, for example, in a plurality of rows (crop rows) in which crops are lined up, by connecting, for each row, the end points of the row. Patent Document 2 relates to a field work machine such as a rice planter, a seeder, or a fertilizer applicator that is equipped with a GPS (Global Positioning System) and can perform automatic work travel along a target route previously set in a field. Patent Document 3 relates to a traveling work machine provided with a positioning unit and automatically steered along a set target travel path, and an automatic steering system used therefor.

### PRIOR ART DOCUMENT

### PATENT DOCUMENT

Patent Document 1: International Publication WO2015/119266. Patent Document 2: JP2015112069A. Patent Document 3: JP2016024540A.

### SUMMARY OF INVENTION

### TECHNICAL PROBLEM

When the work vehicle travels in a region where crops are arranged, for example, the work vehicle travels along a crop row route set depending on the positions of the crops while positioning the work vehicle by using a signal (for example, a GNSS signal) received from a satellite. On the other hand, when the work vehicle travels in a region where any crops are not arranged, for example, the work vehicle travels along a previously set target route while positioning the work vehicle by using the GNSS signal. Here, allowable values are set for the distance (position deviation) from the target route to the work vehicle and the distance (position deviation) from the crop row route to the work vehicle. When the position deviation is equal to or more than the allowable value, the position accuracy of the work vehicle is reduced, so that the travel of the
work vehicle is stopped.

Here, for example, when the work vehicle does not detect any crops while traveling in a crop row, the work vehicle uses a GNSS signal to travel. In this case, when the position deviation at the time when the work vehicle did not detect any crops is equal to or more than the allowable value for the target route, the work vehicle stops and the work is thus interrupted. This causes a problem that the work efficiency is reduced.

An object of the present invention relates to an automatic traveling method, an automatic traveling system, and an automatic traveling program, by which the stop operation of a work vehicle due to a position deviation of the work vehicle is suppressed, so that it is possible to prevent the work efficiency from being reduced.

### SOLUTION TO PROBLEM

An automatic traveling method according to the present invention includes causing a work vehicle to travel in a travel region in a first travel mode in which the work vehicle automatically travels along a target route set previously, based on positioning information of the work vehicle, causing the work vehicle to travel in the travel region in a second travel mode in which the work vehicle automatically travels along a work object route set depending on positions of work objects arranged in the travel region, causing, if a position deviation representing a distance between a current position of the work vehicle and the target route is equal to or more than an allowable value for the first travel mode in the first travel mode, the work vehicle to stop, and causing, if a position deviation representing a distance between the current position of the work vehicle and the work object route is equal to or more than an allowable value for the second travel mode in the second travel mode, the work vehicle to stop, switching from the first travel mode to the second travel mode or from the second travel mode to the first travel mode, and changing, if one travel mode of the first travel mode and the second travel mode is switched to the other travel mode, the allowable value for the other travel mode to a second allowable value larger than a first allowable value set for the other travel mode before the travel mode is switched.

An automatic traveling system according to the present invention includes a travel processing unit, a switching processing unit, and a setting processing unit. The travel processing unit causes a work vehicle to travel in a travel region either in a first travel mode in which the work vehicle automatically travels along a target route previously set, based on positioning information of the work vehicle or in a second travel mode in which the work vehicle automatically travels along a work object route set depending on positions of work objects arranged in the travel region, causes, if a position deviation representing a distance between a current position of the work vehicle and the target route is equal to or more than an allowable value for the first travel mode in the first travel mode, the work vehicle to stop, and causes, if a position deviation representing a distance between the current position of the work vehicle and the work object route is equal to or more than an allowable value for the second travel mode in the second travel mode, the work vehicle to stop. The switching processing unit switches from the first travel mode to the second travel mode or from the second travel mode to the first travel mode. The setting processing unit changes, if one travel mode of the first travel mode and the second travel mode is switched to the other travel mode, the allowable value for the other travel mode to a second allowable value larger than a first allowable value set for the other travel mode before the travel mode is switched.

An automatic traveling program according to the present invention is a program for causing one or more processors to execute causing a work vehicle to travel in a travel region in a first travel mode in which the work vehicle automatically travels along a target route previously set, based on positioning information of the work vehicle, causing the work vehicle to travel in the travel region in a second travel mode in which the work vehicle automatically travels along a work object route set depending on positions of work objects arranged in the travel region, causing, if a position deviation representing a distance between a current position of the work vehicle and the target route is equal to or more than an allowable value for the first travel mode in the first travel mode, the work vehicle to stop, and causing, if a position deviation representing a distance between the current position of the work vehicle and the work object route is equal to or more than an allowable value for the second travel mode in the second travel mode, the work vehicle to stop, switching from the first travel mode to the second travel mode or from the second travel mode to the first travel mode, and changing, if one travel mode of the first travel mode and the second travel mode is switched to the other travel mode, the allowable value for the other travel mode to a second allowable value larger than a first allowable value set for the other travel mode before the travel mode is switched.

### ADVANTAGEOUS EFFECTS OF INVENTION

According to the present invention, it is possible to provide an automatic traveling method, an automatic traveling system, and an automatic traveling program, by which the stop operation of a work vehicle due to a position deviation of the work vehicle is suppressed, so that it is possible to prevent the work efficiency from being reduced.

### BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.
FIG. 5 is a diagram illustrating an example of a crop row according to the embodiment of the present invention.
FIG. 6 is a diagram illustrating an example of a target route according to the embodiment of the present invention.
FIG. 7 is a diagram for explaining an outline of a traveling method for a crop row route travel mode, according to the embodiment of the present invention.
FIG. 8 is a diagram illustrating an example of a travel route of the work vehicle when the travel mode is switched, according to an embodiment of the present invention.
FIG. 9A is a diagram illustrating an example of a traveling method of the work vehicle according to the embodiment of the present invention.
FIG. 9B is a diagram illustrating an example of a traveling method of the work vehicle according to the embodiment of the present invention.
FIG. 9C is a diagram illustrating an example of a traveling method of the work vehicle according to the embodiment of the present invention.
FIG. 10 is a table showing an example of allowable value information used in the automatic traveling system according to the embodiment of the present invention.
FIG. 11 is a diagram illustrating an example of a travel route of the work vehicle when the travel mode is switched, according to an embodiment of the present invention.
FIG. 12 is a diagram illustrating an example of a traveling method of the work vehicle according to the embodiment of the present invention.
FIG. 13A is a diagram for explaining a method of generating a target route according to the embodiment of the present invention.
FIG. 13B is a diagram for explaining a method of generating a target route according to the embodiment of the present invention.
FIG. 14 is a flowchart illustrating an example of the procedure of an automatic traveling process executed by the automatic traveling system according to the embodiment of the present invention.

### DESCRIPTION OF EMBODIMENTS

The following embodiment is an example in which the present invention is embodied, and does not limit the technical scope of the present invention.

### [Automatic Traveling System 1]

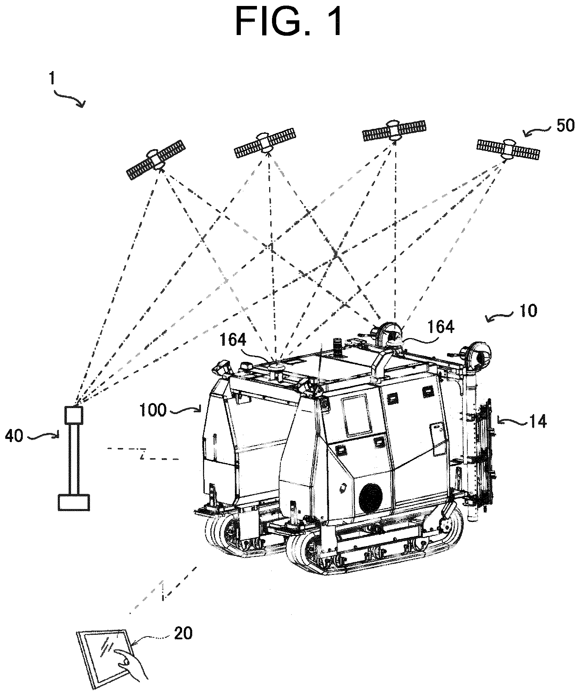

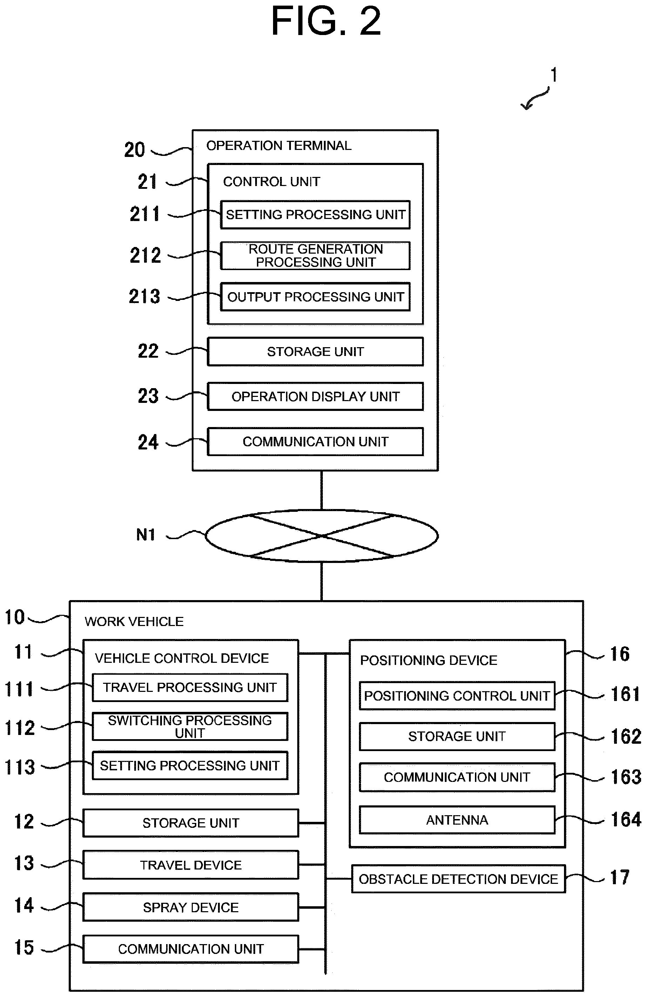

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

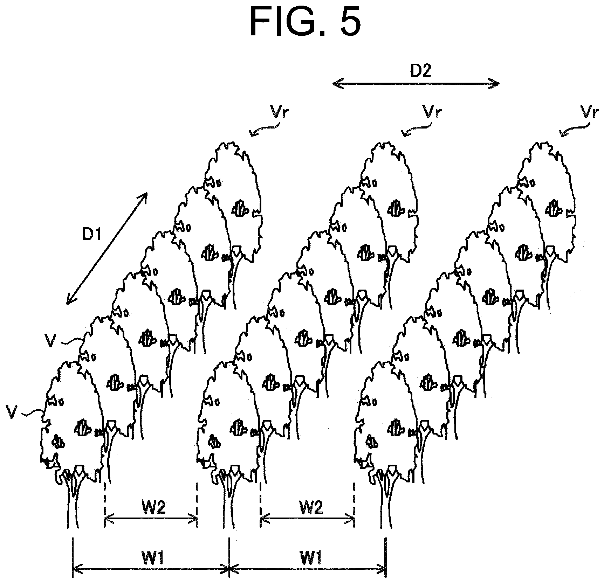

In the present embodiment, a case where the work vehicle 10 is a vehicle for a spraying work for spraying a chemical liquid, water, or the like on crops V (see FIG. 5) planted in a farm field F will be described by way of example. The farm field F is an example of a travel region in the present invention, and the farm field F is, for example, an orchard such as a vineyard or an apple orchard. The crops V are, for example, grape trees. The spraying work is, for example, the work for spraying a spraying material such as a chemical liquid or water on the crops V. In another embodiment, the work vehicle 10 may be a vehicle for performing a weeding work, a vehicle for performing a leaf cutting work, or a vehicle for performing a harvesting work.

The crops V are arranged in a plurality of rows at predetermined intervals in the farm field F. Specifically, as illustrated in FIG. 5, a plurality of the crops V are planted linearly in a predetermined direction (a direction D1), and form a crop row Vr including the plurality of crops V arranged linearly. FIG. 5 illustrates three of the crop rows Vr. The crop rows Vr are arranged in a row direction (a direction D2) at predetermined intervals W1. A region (space) of an interval W2 between adjacent ones of the crop rows Vr is a work passage where the work vehicle 10 performs a spraying work on the crops V while traveling in the direction D1.

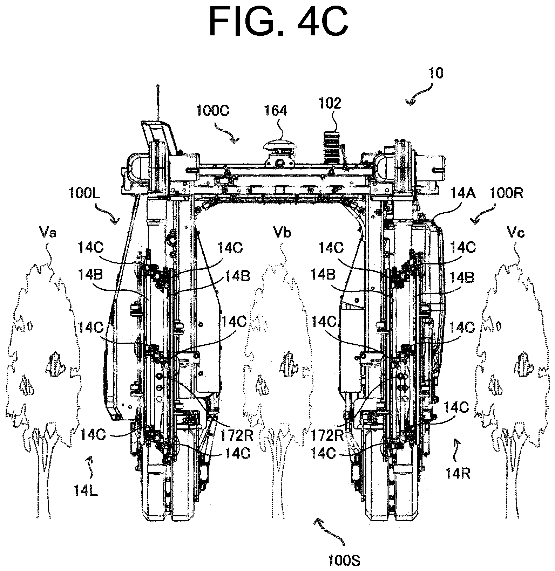

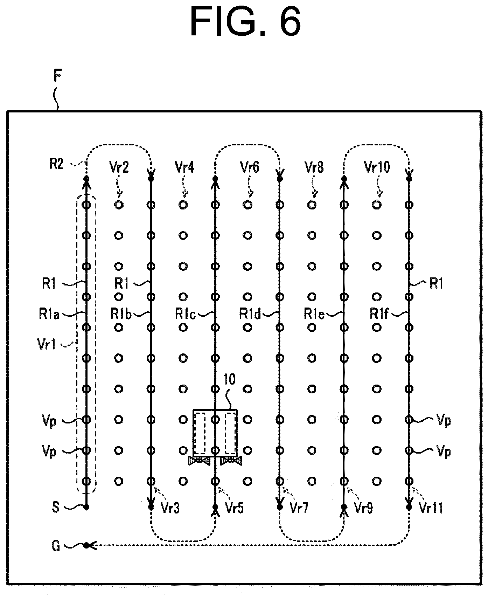

The work vehicle 10 is capable of traveling automatically (autonomously traveling) along a target route R set in advance. For example, as illustrated in FIG. 6, the work vehicle 10 automatically travels from a work start position S to a work end position G along the target route R including a work route R1 (work routes R1a to R1f) and a movement route R2. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V forming crop rows Vr1 to Vr11 are arranged in the farm field F. In FIG. 6, positions (crop positions) where the crops V are planted are represented by "Vp". The work vehicle 10 traveling in the farm field F of FIG. 6 includes a vehicle body 100 having an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process for calculating a current position (a latitude, a longitude, and an altitude), a current orientation, and the like of the work vehicle 10 by utilizing the GNSS signal transmitted from the satellite 50. Specifically, the positioning device 16 positions the work vehicle 10 by utilizing a real time kinetic (RTK) method or the like for positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted.

Each constituent components configuring the automatic traveling system 1 will be described in detail below.

### [Work Vehicle 10]

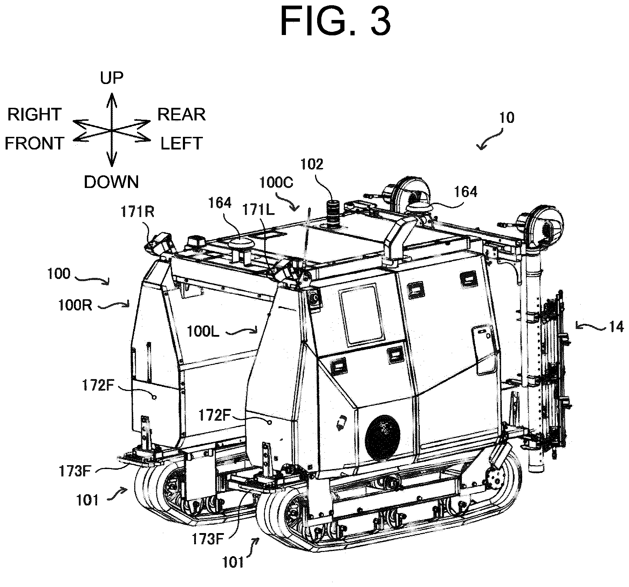

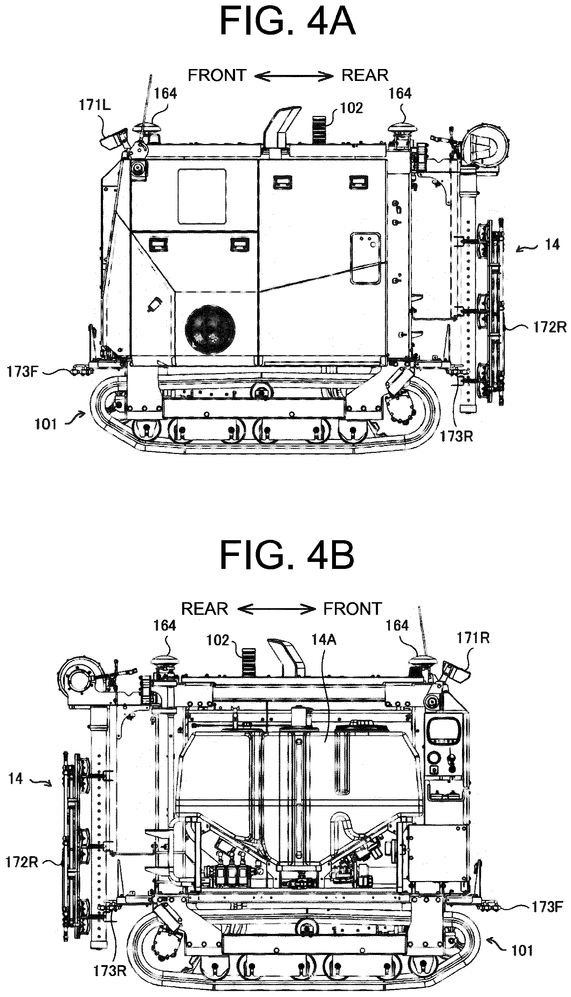

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, and an obstacle detection device 17, for example. The vehicle control device 11 is electrically connected to the storage unit 12, the travel device 13, the spray device 14, the positioning device 16, and the obstacle detection device 17, for example. The vehicle control device 11 and the positioning device 16 may be capable of performing wireless communication.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

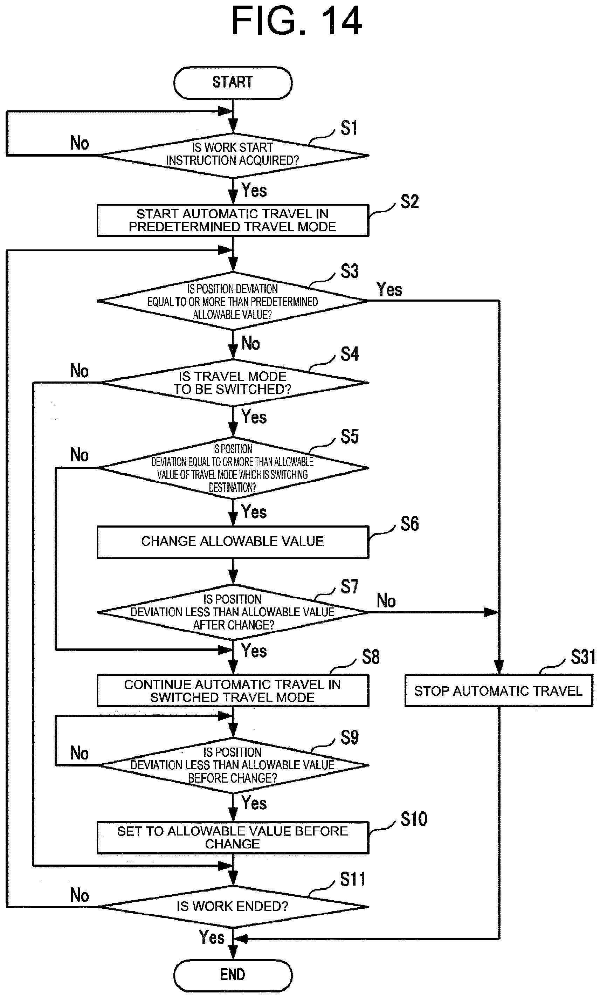

The storage unit 12 is a non-volatile storage unit such as a hard disk drive (HDD) or a solid state drive (SSD) that stores various types of information. The storage unit 12 stores a control program such as an automatic traveling program for causing the vehicle control device 11 to execute an automatic traveling process (see FIG. 14) described later. For example, the automatic traveling program is recorded non-temporarily on a computer-readable recording medium such as a CD or a DVD, and is stored in the storage unit 12 after being read by a predetermined reading device (not illustrated). It is noted that the automatic traveling program may be downloaded from a server (not illustrated) to the work vehicle 10 via the communication network N1 and stored in the storage unit 12. The storage unit 12 stores route data including information on the target route R generated by the operation terminal 20. For example, the route data is transferred from the operation terminal 20 to the work vehicle 10 and stored in the storage unit 12.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection unit 100C.

A crawler 101 is provided at the lower end of each of the left-side part 100L and the right-side part 100R of the vehicle body 100. The left-side part 100L is provided with an engine (not illustrated), a battery (not illustrated), and the like. The right-side part 100R is provided with a storage tank 14A (see FIG. 4B) of the spray device 14 and the like. Thus, constitution components are arranged in a distributed manner in the left-side part 100L and the right-side part 100R of the vehicle body 100, and thus, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine, the crawler 101, and the like.

The left and right crawlers 101 are driven by power from the engine in a state where independent transmission is possible by a hydrostatic continuously variable transmission. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving and turning state where the vehicle body 100 moves forward while turning, and when the left and right crawlers 101 are driven at an irregular speed in the backward direction, the vehicle body 100 is in a backward-moving and turning state where the vehicle body 100 moves backward while turning. When one of the left and right crawlers 101 is stopped in drive while the other one of the crawlers 101 is driven, the vehicle body 100 is in a pivot turning (pivot turn) state, and when the left and right crawlers 101 are driven at a constant speed in the forward direction and in the backward direction, the vehicle body 100 is in a spin turning (neutral turn) state. When the left and right crawlers 101 are stopped in drive, the vehicle body 100 stops traveling. The left and right crawlers 101 may have an electrically driven configuration in which the left and right crawlers 101 are driven by an electric motor.

As illustrated in FIG. 4C, the spray device 14 includes the storage tank 14A that stores a chemical liquid or the like, a spraying pump (not illustrated) that pumps a chemical liquid or the like, an electric spraying motor (not illustrated) that drives the spraying pump, a belt-type transmission device (not illustrated) that transmits power from the spraying motor to the spraying pump, two spraying pipes 14B installed in parallel on each of the left and right in a vertical position on the back of the vehicle body 100, a total of 12 spraying nozzles 14C in which three nozzles are installed on each of the spraying pipes 14B, an electronically controlled valve unit (not illustrated) that changes a spraying amount and a spraying pattern of a chemical liquid or the like, and a plurality of spraying pipes (not illustrated) that connects these components.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The vehicle body 100 is equipped with an automatic travel control unit that causes the vehicle body 100 to automatically travel according to the target route R of the farm field F, based on the positioning information and the like acquired from the positioning device 16, an engine control unit that controls the engine, a hydro-static transmission (HST) control unit that controls the hydrostatic continuously variable transmission, and a work device control unit that controls a work device such as the spray device 14. Each of the control units is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication equipment including a positioning control unit 161, a storage unit 162, a communication unit 163, the antenna 164, and the like. The antenna 164 is provided at the front and rear parts of a roof (the connection unit 100C) of the vehicle body 100 (see FIG. 3). The roof of the vehicle body 100 is also provided with an indication lamp 102 or the like for indicating a travel state of the work vehicle 10 (see FIG. 3). The battery is connected to the positioning device 16, so that the positioning device 16 can operate even when the engine is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (measurement target) in the measurement range by a time of flight (TOF) method for measuring the distance to the ranging point, based on a round-trip time required by laser light input to the LiDAR sensor to reach the ranging point and return to the LiDAR sensor, for example.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information such as the measured distance to each ranging point and the scanning angle (coordinates) for each ranging point to the vehicle control device 11.

Further, the obstacle detection device 17 includes left and right ultrasonic sensors 172F (see FIG. 3) provided on the front side of the vehicle body 100 and left and right ultrasonic sensors 172R (see FIGS. 4A to 4C) provided on the rear side of the vehicle body 100. Each ultrasonic sensor measures a distance from the ultrasonic sensor to a measurement target by the TOF method for measuring a distance to a ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as the measurement range, the ultrasonic sensor 172F on the front and right side has the predetermined range on the front and right side of the vehicle body 100 set as the measurement range, the ultrasonic sensor 172R on the rear and left side has a predetermined range on the rear and left side of the vehicle body 100 set as the measurement range, and the ultrasonic sensor 172R on the rear and right side has the predetermined range on the rear and right side of the vehicle body 100 set as the measurement range. Each ultrasonic sensor transmits measurement information including the distance to the measurement target and the direction of the object to be measured to the vehicle control device 11.

Further, the obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The spray device 14 is provided in front of each contact sensor (on the rear side of the work vehicle 10), and each contact sensor detects an obstacle by the spray device 14 moving to the rear (the front side of the work vehicle 10) when the obstacle comes into contact with the spray device 14. Each contact sensor transmits a detection signal to the vehicle control device 11 when an obstacle is detected. The vehicle control device 11 executes an avoidance process for avoiding an obstacle when the work vehicle 10 may collide with the obstacle, based on the measurement information about the obstacle acquired from the obstacle detection device 17. Further, the vehicle control device 11 detects a position deviation and an orientation deviation of the work vehicle 10 and performs an operation to avoid a collision with any of the crop rows Vr.

The vehicle control device 11 includes a control device such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a travel processing unit 111, a switching processing unit 112, and a setting processing unit 113. It is noted that the vehicle control device 11 functions as the various types of processing units by causing the CPU to execute various types of processes according to the control programs. Further, some or all of the processing units may be configured by an electronic circuit. It is noted that the control programs may be programs for causing a plurality of processors to function as the processing units.

The travel processing unit 111 executes a traveling process for controlling the travel operation of the work vehicle 10. For example, the travel processing unit 111 causes the work vehicle 10 to travel in a target route travel mode M1 (corresponding to a first travel mode in the present invention) in which the work vehicle 10 automatically travels along the target route R, based on positioning information including the position and the orientation of the work vehicle 10 positioned by the positioning device 16. For example, when the positioning state allows the RTK positioning in a region where any crops V are not arranged (a headland region, a non-work region, etc.), the travel processing unit 111 causes the work vehicle 10 to start automatic travel in the target route travel mode M1, based on the positioning information of the work vehicle 10 positioned by the positioning device 16. Accordingly, the work vehicle 10 starts automatic travel along the target route R. It is noted that the condition that the positioning state allows the RTK positioning (high accuracy condition) is included in the conditions (automatic travel start conditions) for the work vehicle 10 to start automatic travel.

In this way, the travel processing unit 111 causes the work vehicle 10 to automatically travel in the target route travel mode M1 in the region (headland area or the like) where any crops V are not arranged in the farm field F. The work vehicle 10 travels along the target route R while estimating its own position by using a GNSS signal.

Further, the travel processing unit 111 causes the work vehicle 10 to travel in a crop row route travel mode M2 (corresponding to a second travel mode in the present invention) in which the work vehicle 10 automatically travels along a crop row route RO set depending on the positions of the crops V arranged in the farm field F. The crop row route travel mode M2 is a travel mode in which the work vehicle 10 travels along the crop row route R0 estimated based on the measurement results of the LiDAR sensors 171L and 171R, for example. Specifically, the obstacle detection device 17 integrates the results of detecting obstacles on the work path R1 and the measurement results of the LiDAR sensors 171L and 171R to estimate the work route R1 across which the work vehicle 10 travels, specifically, the crop row route R0 of a crop row (crop row Vr5 in FIG. 6) (an example of a work object route in the present invention). The obstacle detection device 17 also transmits, to the vehicle control device 11, the positions (coordinates) of the starting point and the ending point of the estimated crop row route R0. The travel processing unit 111 causes the work vehicle 10 to automatically travel along the estimated crop row route R0 while estimating its own position by using the GNSS signal in the crop row route travel mode M2. In this way, the travel processing unit 111 causes the work vehicle 10 to automatically travel along the target route R by using the positioning information in the target route travel mode M1 while the travel processing unit 111 causes the work vehicle 10 to automatically travel along the crop row route R0 by using the positioning information and the results of detecting the crops V in the crop row route travel mode M2.

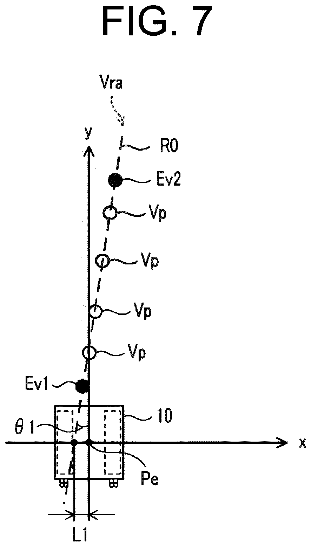

FIG. 7 illustrates an outline of a traveling method for the crop row route travel mode M2. In FIG. 7, R0 represents the route of an estimated crop row Vra, Ev1 represents the starting point of the crop row Vra, Ev2 represents the ending point of the crop row Vra, Vp represents each crop contained in the crop row Vra, and Pe represents the current position of the work vehicle 10. It is noted that the ending point Ev2 may be the same as the end point (ending point) illustrated in FIG. 6. Further, the starting point Ev1 is, for example, the position of the crop V closest to the current position Pe among the crops V included in the crop row Vra.

The travel processing unit 111 calculates a horizontal position deviation L1 and an orientation deviation θ1 of the work vehicle 10 with respect to the crop row Vra, and causes the work vehicle 10 to travel from the current position Pe to the ending point Ev2 while controlling the posture of the work vehicle 10 so that the position deviation L1 and the orientation deviation θ1 are small.

Here, the result of estimating the crop row Vra includes an error, and thus, it is preferable to perform a filtering process using a moving average filter, a low-pass filter, or the like on the calculated position deviation L1 and orientation deviation θ1. Then, it is preferable that the travel processing unit 111 controls the travel of the work vehicle 10 by using the result of the filtering process.

Further, the result of estimating the past crop row Vra may be used to enhance the accuracy of estimation of the crop row Vra. In this case, it is necessary to increase the number of end points of the crop row Vra, and it is thus necessary to calculate a relative movement amount of the work vehicle 10 to use the past data, and change the coordinates of the detected position of the past crop row Vra. In the calculation of the relative movement amount, the data of a rotation speed sensor and an inertial measurement unit (IMU) mounted on the crawler 101 are integrated by a known method such as a Kalman filter to estimate a movement amount of the crop row Vra. The work vehicle 10 calculates the distance to the ending point from the positioning information (GNSS position information) every control cycle during automatic travel, and thus the travel processing unit 111 executes a process for determining the arrival of the work vehicle 10 to the end point (ending point Ev2) of the crop row Vra, based on information of the distance to the ending point before the positioning accuracy is less than a predetermined accuracy and based on the estimated movement amount of the work vehicle 10, and causes the work vehicle 10 to automatically travel until the arrival at the end point. It is noted that, depending on the arrangement of the crops V, the LiDAR sensors 171L and 171R may fail to detect the crops V. In this case, when an error in estimating the crop row Vra occurs continuously a predetermined number of times, the travel processing unit 111 ends the automatic travel in the crop row route travel mode M2.

As described above, the travel processing unit 111 causes the work vehicle 10 to automatically travel in the target route travel mode M1 or the crop row route travel mode M2 depending on the positions of the crops V in the farm field F.

Further, the travel processing unit 111 causes, when a position deviation representing a distance between the current position Pe of the work vehicle 10 and the target route R is equal to or more than an allowable value for the target route travel mode M1 in the target route travel mode M1, the work vehicle 10 to stop; and causes, when a position deviation representing a distance between the current position Pe of the work vehicle 10 and the crop row route R0 is equal to or more than an allowable value for the crop row route travel mode M2 in the crop row route travel mode M2, the work vehicle 10 to stop.

The switching processing unit 112 switches the travel mode of the work vehicle 10 from the target route travel mode M1 to the crop row route travel mode M2 or from the crop row route travel mode M2 to the target route travel mode M1. In other words, the switching processing unit 112 sets the travel mode of the work vehicle 10. For example, when the obstacle detection device 17 does not detect any crops V, based on the detection results of the LiDAR sensors 171L and 171R, the switching processing unit 112 sets the travel mode of the work vehicle 10 to the target route travel mode M1. Further, for example, when the obstacle detection device 17 detects a crop V, based on the detection results of the LiDAR sensors 171L and 171R, the switching processing unit 112 sets the travel mode of the work vehicle 10 to the crop row route travel mode M2.

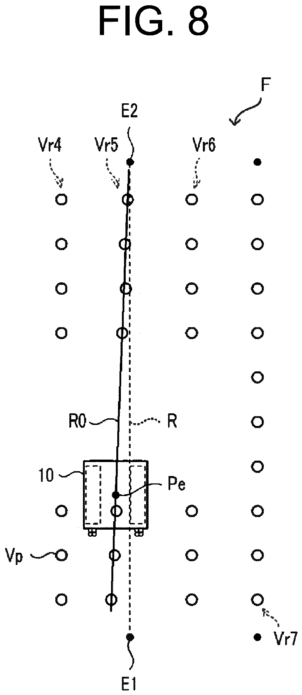

For example, when the work vehicle 10 enters a region where any crops V are not arranged while traveling in the crop row route travel mode M2, the work vehicle 10 switches to the target route travel mode M1 to travel. FIG. 8 illustrates an example of a travel route of the work vehicle 10 when the travel mode is switched.

In the farm field F illustrated in FIG. 8, a region in which any crops V are not arranged is included in the middle of the crop row Vr5 on which the work vehicle 10 is traveling. In this case, at the time when the work vehicle 10 reaches that region (at the current position Pe in FIG. 8) after automatically traveling on the crop row Vr5 in the crop row route travel mode M2, the obstacle detection device 17 detects no crop V in front. Thus, the work vehicle 10 cannot travel along the crop row route R0 corresponding to the crop row Vr5, and thus, the switching processing unit 112 switches the travel mode from the crop row route travel mode M2 to the target route travel mode M1. Accordingly, the work vehicle 10 switches from automatic travel along the crop row route R0 to automatic travel along the target route R (work route R1) using a GNSS signal.

When the travel mode is switched from the crop row route travel mode M2 to the target route travel mode M1, the following problems may occur.

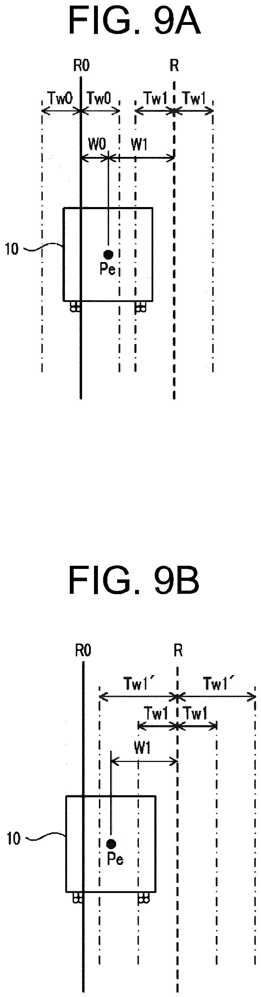

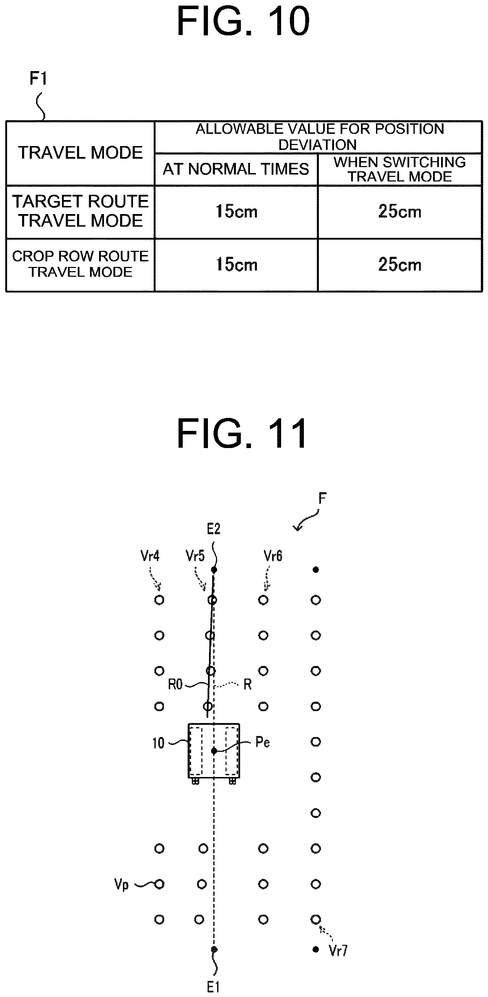

FIG. 9A illustrates a state where the work vehicle 10 automatically travels along the crop row route R0. Here, the setting processing unit 113 sets an allowable value Tw1 for the target route travel mode M1 and an allowable value Tw0 for the crop row route travel mode M2. FIG. 10 shows an example of allowable value information F1 including the allowable value information for each travel mode. For example, in the crop row route travel mode M2, when a distance W0 (position deviation) from the current position Pe to the crop row route R0 is less than the allowable value Tw0 (for example, 15 cm), the travel processing unit 111 causes the work vehicle 10 to automatically travel, when the distance W0 is equal to or more than the allowable value Tw0, the travel processing unit 111 causes the work vehicle 10 to stop. In the state illustrated in FIG. 9A, the distance W0 is less than the allowable value Tw0, and thus, the travel processing unit 111 causes the work vehicle 10 to automatically travel in the crop row route travel mode M2. Specifically, the work vehicle 10 automatically travels along the crop row route R0 while using a GNSS signal.

Here, when the obstacle detection device 17 does not detect any crops V in front (see FIG. 8), the switching processing unit 112 switches the travel mode of the work vehicle 10 to the target route travel mode M1. In this case, when a distance W1 (position deviation) from the current position Pe to the target route R is less than the allowable value Tw1 (for example, 15 cm), the travel processing unit 111 causes the work vehicle 10 to automatically travel, when the distance W1 is equal to or more than the allowable value Tw1, the travel processing unit 111 causes the work vehicle 10 to stop. Here, as illustrated in FIG. 9B, the distance W1 is equal to or more than the allowable value Tw1, and thus, the travel processing unit 111 causes the work vehicle 10 to stop. In this way, when the position deviation of the work vehicle 10 (distance W0 or W1 in FIG. 9A) is equal to or more than the allowable value (allowable value Tw0 or Tw1 in FIG. 9A) for the travel mode, which is the switching destination, at the time of switching the travel mode, there is a problem that the work vehicle 10 stops and the work is thus interrupted.

Therefore, when one of the target route travel mode M1 and the crop row route travel mode M2 is switched to the other travel mode, the setting processing unit 113 according to the present embodiment changes the allowable value for the other travel mode to a second allowable value larger than a first allowable value set for the other travel mode before the travel mode is switched. In the example illustrated in FIG. 9B, when the crop row route travel mode M2 is switched to the target route travel mode M1, the setting processing unit 113 changes the allowable value for the target route travel mode M1 to an allowable value Tw1' (for example, 25 cm), which is larger than the previously set allowable value Tw1 (15 cm). It is noted that the allowable value Tw1' which is to be set when the travel mode is switched may be registered in advance in the allowable value information F1 (see FIG. 10). The setting processing unit 113 changes (sets) the allowable value for the target route travel mode M1 to the allowable value Tw1' (25 cm) by referring to the allowable value information F1. It is noted that the allowable value Tw1' (25 cm) is, for example, a value obtained by adding the allowable value (10 cm) of the position deviation (deviation in position) with respect to the crop row route R0 to the previously set allowable value Tw1 (15 cm). The allowable value Tw1 (15 cm) is an example of the first allowable value in the present invention, and the allowable value Tw1' (25 cm) is an example of the second allowable value in the present invention.

When the allowable value for the target route travel mode M1 is changed to the allowable value Tw1', the distance W1 is less than the allowable value Tw1' as illustrated in FIG. 9B, so that the travel processing unit 111 can cause the work vehicle 10 to automatically travel in the target route travel mode M1 without stopping. Specifically, the work vehicle 10 automatically travels along the target route R while using a GNSS signal. Further, the travel processing unit 111 causes the work vehicle 10 to travel along the target route R while controlling the posture of the work vehicle 10 so that the distance W1 (position deviation) is small.

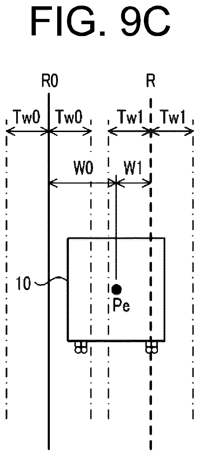

The work vehicle 10 travels along the target route R after the travel mode is switched to the target route travel mode M1, and then when the distance W1 is less than the previously set allowable value Tw1 (15 cm) as illustrated in FIG. 9C, the setting processing unit 113 changes the allowable value for the target route travel mode M1 from the allowable value Tw1' (25 cm) to the allowable value Tw1 (15 cm). When the allowable value for the target route travel mode M1 is changed to the allowable value Tw1, the work vehicle 10 continues automatic travel using the allowable value Tw1.

It is noted that the timing at which the setting processing unit 113 changes the allowable value for the target route travel mode M1 from the allowable value Tw1' to the allowable value Tw1 is not limited to the above-described embodiment. In another embodiment, for example, when the distance W1 (position deviation) is less than a predetermined value (for example, 10 cm) smaller than the allowable value Tw1 (15 cm) after the crop row route travel mode M2 is switched to the target route travel mode M1 and then the work vehicle 10 starts traveling in the target route travel mode M1, the setting processing unit 113 may change the allowable value Tw1' (25 cm) to the allowable value Tw1 (15 cm). As a result, the position deviation of the work vehicle 10 can be surely made less than the allowable value, so that it is possible to prevent the work vehicle 10 from stopping immediately after the travel mode is switched.

Further, in another embodiment, for example, when a predetermined time has elapsed since the crop row route travel mode M2 was switched to the target route travel mode M1 and then the work vehicle 10 started traveling in the target route travel mode M1, the setting processing unit 113 may change the allowable value Tw1' (25 cm) to the allowable value Tw1 (15 cm). The predetermined time is set to, for example, a time required for the distance W1 (position deviation) to be made smaller than the allowable value Tw1 (15 cm). As a result, the position deviation of the work vehicle 10 can be surely made less than the allowable value, so that it is possible to prevent the work vehicle 10 from stopping immediately after the travel mode is switched.

Incidentally, it is also conceivable that the position deviation of the work vehicle 10 is equal to or more than the allowable value after change at the time when the travel mode is switched. In this case, since the position accuracy of the work vehicle 10 cannot be guaranteed, the automatic travel is interrupted, and thus, the work vehicle 10 is stopped. For example, in FIG. 9B, when the distance W1 is equal to or more than the allowable value Tw1' at the time when the travel mode is switched to the target route travel mode M1 or when the allowable value is changed to the allowable value Tw1', the travel processing unit 111 causes the work vehicle 10 to stop. In this case, the vehicle control device 11 may notify the operation terminal 20 of abnormality information.

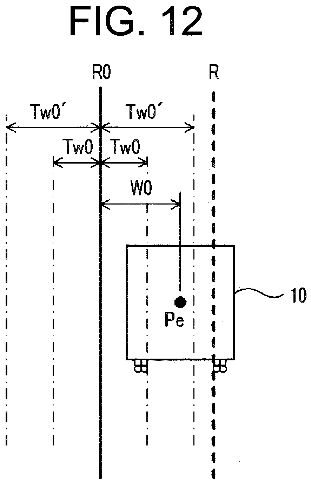

FIGS. 8 and 9A to 9C illustrate example arrangements in which the switching processing unit 112 switches from the crop row route travel mode M2 to the target route travel mode M1. On the other hand, FIGS. 11 and 12 illustrate example arrangements in which the switching processing unit 112 switches from the target route travel mode M1 to the crop row route travel mode M2. For example, when the work vehicle 10 enters a region where crops V are arranged while traveling in the target route travel mode M1 and then the obstacle detection device 17 detects the crops V in front (see FIG. 11), the travel processing unit 111 estimates the crop row route R0. Further, the switching processing unit 112 switches the travel mode of the work vehicle 10 from the target route travel mode M1 to the crop row route travel mode M2.

Further, the setting processing unit 113 changes the allowable value for the crop row route travel mode M2 to an allowable value Tw0' (25 cm) larger than the previously set allowable value Tw0 (15 cm) (see FIGS. 10 and 12). It is noted that the allowable value Tw0' (25 cm) is, for example, a value obtained by adding the allowable value (10 cm) of the position deviation (deviation in position) with respect to the crop row route R0 to the previously set allowable value Tw0 (15 cm). The allowable value Tw0 (15 cm) is an example of the first allowable value in the present invention, and the allowable value Tw0' (25 cm) is an example of the second allowable value in the present invention. It is noted that the allowable value Tw0 and the allowable value Tw1 may be the same value or different values. Further, the allowable value Tw0' and the allowable value Tw1' may be the same value or different values.

When the allowable value for the crop row route travel mode M2 is changed to the allowable value Tw0', the distance W0 is less than the allowable value Tw0' as illustrated in FIG. 12, so that the travel processing unit 111 can cause the work vehicle 10 to automatically travel in the crop row route travel mode M2 without stopping. Specifically, the work vehicle 10 automatically travels along the crop row route R0 while using a GNSS signal. Further, the travel processing unit 111 causes the work vehicle 10 to travel along the crop row route R0 while controlling the posture of the work vehicle 10 so that the distance W0 (position deviation) is small.

As described above, when the work vehicle 10 detects the crop V (work object(s)) while traveling in the target route travel mode M1, the switching processing unit 112 switches the target route travel mode M1 to the crop row route travel mode M2; when the work vehicle 10 does not detect any crops V while traveling in the crop row route travel mode M2, the switching processing unit 112 switches the crop row route travel mode M2 to the target route travel mode M1.

Further, the travel processing unit 111 causes the work vehicle 10 to automatically travel in the target route travel mode M1 in a region where any crops V are not arranged in the farm field F, and causes the work vehicle 10 to automatically travel in the crop row route travel mode M2 in a region where crops V are arranged in the farm field F.

It is noted that, when acquiring a travel stop instruction from the operation terminal 20, the travel processing unit 111 causes the work vehicle 10 to stop the automatic travel. For example, when an operator depresses a stop button on an operation screen of the operation terminal 20, the operation terminal 20 outputs the travel stop instruction to the work vehicle 10. When acquiring the travel stop instruction from the operation terminal 20, the travel processing unit 111 causes the work vehicle 10 to stop the automatic travel. Thus, the work vehicle 10 stops the automatic travel and stops the spraying work by the spray device 14.

The above-described configuration of the work vehicle 10 is an example of the configuration of the work vehicle according to the present invention, and the present invention is not limited to the above-described configuration. The above-mentioned work vehicle 10 is a vehicle capable of performing the spraying work for spraying the spraying material to the first crop row Vr and the second crop row Vr in each of the left-right direction of the first crop row Vr while traveling across the first crop row Vr. In another embodiment, the vehicle body 100 of the work vehicle 10 may have a typical shape instead of the inverted U-shape, so that the vehicle body 100 entirely travels between the crop rows Vr (work passages). In this case, the work vehicle 10 automatically travels sequentially on each work passage, without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

### [Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD, which stores various types of information. The storage unit 22 stores a control program such as an automatic traveling program for causing the control unit 21 to execute an automatic traveling process (see FIG. 14) described later. For example, the automatic traveling program is recorded non-temporarily on a computer-readable recording medium such as a CD or a DVD, and is stored in the storage unit 22 after being read by a predetermined reading device (not illustrated). It is noted that the automatic traveling program may be downloaded from a server (not illustrated) to the operation terminal 20 via the communication network N1 and stored in the storage unit 22.

The control unit 21 includes control devices such as a CPU, a ROM, and a RAM. The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

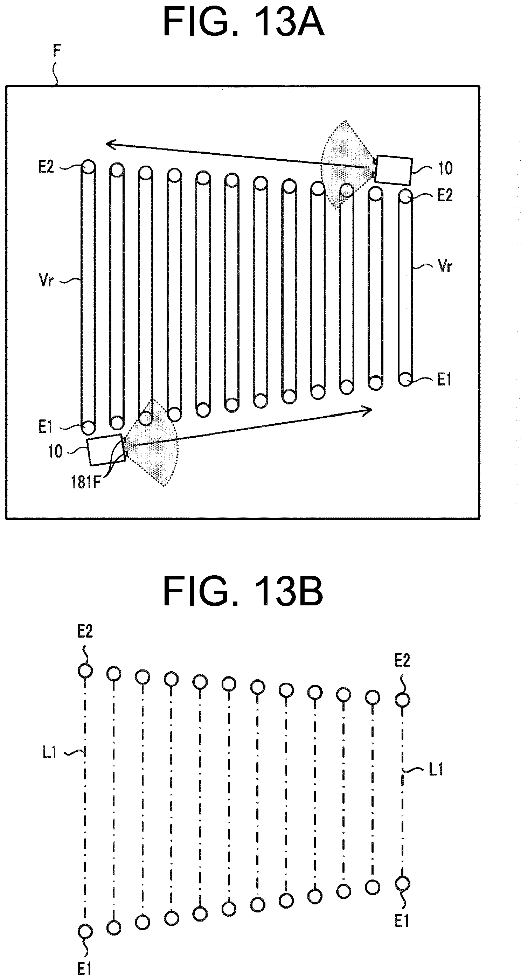

An example of a method of generating the target route R will be described with reference to FIGS. 13A and 13B. FIG. 13A schematically illustrates the crop rows Vr. Firstly, an operator manually causes the work vehicle 10 to travel along the outer perimeter of the crop rows Vr (see FIG. 13A). While traveling, the work vehicle 10 detects end points E1 on one side (lower side in FIG. 13A) and end points E2 on the other side (upper side in FIG. 13A) of the crop rows Vr, and acquires position information (coordinates) of each of the end points E1 and E2. It is noted that the end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 13B) connecting corresponding ones of the end points E1 and E2 as work routes of the crop rows Vr, to generate the target route R including the plurality of work routes and movement routes (turning routes). The method of generating the target route R is not limited to the method described above. The route generation processing unit 212 may store the generated target route R into the storage unit 22.

The output processing unit 213 outputs, to the work vehicle 10, route data including information about the target route R generated by the route generation processing unit 212. It is noted that the output processing unit 213 may output the route data to a server (not illustrated). The server stores and manages a plurality of the route data acquired from each of the plurality of operation terminals 20 in association with the operation terminal 20 and the work vehicle 10.

In addition to the above-described processes, the control unit 21 executes a process for causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

### [Automatic Traveling Process]

An example of the automatic traveling process executed by the vehicle control device 11 of the work vehicle 10 will be described below with reference to FIG. 14.

It is noted that the present invention may be regarded as an invention of an automatic traveling method in which one or more steps included in the automatic traveling process are executed. Further, one or more steps included in the automatic traveling process described herein may be omitted where appropriate. It is noted that the steps in the automatic traveling process may be executed in a different order, as long as a similar operation and effect are obtained. Here, a case where each of the steps in the automatic traveling process is executed by the vehicle control device 11 is described by way of example, but another embodiment may be an automatic traveling method in which the steps in the automatic traveling process are executed in a distributed manner by one or more processors.

In step S1, the vehicle control device 11 determines whether a work start instruction has been acquired from the operation terminal 20. For example, when an operator depresses a start button on the operation terminal 20, the operation terminal 20 outputs the work start instruction to the work vehicle 10. When the vehicle control device 11 acquires the work start instruction from the operation terminal 20 (S1: Yes), the process proceeds to step S2. The vehicle control device 11 waits until the work start instruction is acquired from the operation terminal 20 (S1: No).

In step S2, the vehicle control device 11 starts automatic travel in a predetermined travel mode. For example, when the vehicle control device 11 acquires the work start instruction from the operation terminal 20, detects crops V, and estimates the crop row route RO, the vehicle control device 11 sets the travel mode to the crop row route travel mode M2. Then, the vehicle control device 11 starts automatic travel along the crop row route RO, based on the positioning information (RTK positioning information) of the work vehicle 10. Further, the vehicle control device 11 causes the spray device 14 to start a spraying work for spraying a chemical liquid on the crop rows Vr.

Next, in step S3, the vehicle control device 11 determines whether the position deviation of the work vehicle 10 is equal to or more than a previously set allowable value for a predetermined travel mode. Here, the vehicle control device 11 determines whether the position deviation (distance W0) of the work vehicle 10 (see FIG. 9A) is equal to or more than the allowable value Tw0 (15 cm) for the crop row route travel mode M2 (see FIG. 10). When the position deviation is equal to or more than the predetermined allowable value (S3: Yes), the process proceeds to step S31. On the other hand, when the position deviation is less than the predetermined allowable value (S3: No), the process proceeds to step S4.

In step S4, the vehicle control device 11 determines whether to switch the travel mode. For example, when the vehicle control device 11 travels in the crop row route travel mode M2 while detecting crops V but does not detect any crops V, the vehicle control device 11 determines that the travel mode is to be switched to the target route travel mode M1. When the vehicle control device 11 determines that the travel mode is to be switched (S4: Yes), the process proceeds to step S5. On the other hand, when the vehicle control device 11 that the travel mode is not to be switched (S4: No), the process proceeds to step S11.

In step S5, the vehicle control device 11 determines whether the position deviation of the work vehicle 10 is equal to or more than the allowable value for the travel mode which is the switching destination. For example, the vehicle control device 11 determines whether the position deviation (distance W1) of the work vehicle 10 (see FIG. 9A) is equal to or more than the allowable value Tw1 (15 cm) for the target route travel mode M1 (see FIG. 10) which is the switching destination. When the position deviation of the work vehicle 10 is equal to or more than the allowable value for the travel mode which is the switching destination (S5: Yes), the process proceeds to step S6. On the other hand, when the position deviation of the work vehicle 10 is less than the allowable value for the travel mode which is the switching destination (S5: No), the process proceeds to step S8.

In step S6, the vehicle control device 11 changes the allowable value of the travel mode which is the switching destination to an allowable value larger than the allowable value set for the travel mode before the travel mode is switched. For example, the vehicle control device 11 changes the allowable value for the target route travel mode M1 to the allowable value Tw1' (25 cm) larger than the previously set allowable value Tw1 (15 cm) (see FIGS. 9 and 10).

Next, in step S7, the vehicle control device 11 determines whether the position deviation of the work vehicle 10 is less than the allowable value after change for the travel mode which is the switching destination. For example, the vehicle control device 11 determines whether the position deviation (distance W1) of the work vehicle 10 (see FIG. 9B) is less than the allowable value Tw1' (25 cm) after change for the target route travel mode M1 (see FIG. 10). When the position deviation of the work vehicle 10 is less than the allowable value after change for the travel mode which is the switching destination (S7: Yes), the process proceeds to step S8. On the other hand, when the position deviation of the work vehicle 10 is equal to or more than the allowable value after change for the travel mode which is the switching destination (S7: No), the process proceeds to step S31.

In step S8, the vehicle control device 11 continues the automatic travel in the switched travel mode. For example, the vehicle control device 11 continues the automatic travel of the work vehicle 10 in the target route travel mode M1.

Next, in step S9, the vehicle control device 11 determines whether the position deviation of the work vehicle 10 is less than the allowable value before change for the travel mode which is the switching destination. For example, the vehicle control device 11 determines whether the position deviation (distance W1) of the work vehicle 10 (see FIG. 9B) is less than the allowable value Tw1 (15 cm) before change for the target route travel mode M1 (see FIG. 10). When the position deviation of the work vehicle 10 is less than the allowable value before change for the travel mode which is the switching destination (S9: Yes) (see FIG. 9C), the process proceeds to step S10. The vehicle control device 11 continues the automatic travel in the target route travel mode M1 until the position deviation of the work vehicle 10 is less than the allowable value before change for the travel mode which is the switching destination (S9: No).

Next, in step S10, the vehicle control device 11 returns the allowable value for the travel mode which is the switching destination from the allowable value after change to the allowable value before change. For example, the vehicle control device 11 changes the allowable value for the target route travel mode M1 from the allowable value Tw1' (25 cm) to the previously set allowable value Tw1 (15 cm) (see FIG. 9C).

In step S11, the vehicle control device 11 determines whether the work vehicle 10 has ended the work. The vehicle control device 11 determines that the work has been ended when the position of the work vehicle 10 matches the work end position G (see FIG. 6). When the work vehicle 10 has ended the work (S11: Yes), the automatic traveling process ends.

The vehicle control device 11 repeats the processes of steps S3 to S10 until the work vehicle 10 ends the work (S11: No). For example, when the vehicle control device 11 detects the crop V while the work vehicle 10 is traveling in the target route travel mode M1 (see FIG. 12), the vehicle control device 11 switches the travel mode to the crop row route travel mode M2 (S3, S4). Further, the vehicle control device 11 changes the allowable value for the crop row route travel mode M2 to the allowable value Tw0' (25 cm) larger than the previously set allowable value Tw0 (15 cm), and causes the work vehicle 10 to continue the automatic travel in the crop row route travel mode M2 (S5 to S8). Further, when the position deviation (distance W0) of the work vehicle 10 (see FIG. 12) is less than the allowable value Tw0 (15 cm) before change for the crop row route travel mode M2 (see FIG. 10), the vehicle control device 11 changes the allowable value for the crop row route travel mode M2 from the allowable value Tw0' (25 cm) to the previously set allowable value Tw0 (15 cm) (S9, S10).

In step S31, the vehicle control device 11 causes the work vehicle 10 to stop to end the automatic traveling process. Further, the vehicle control device 11 notifies the operation terminal 20 of warning information.

As described above, the automatic traveling system 1 according to the present embodiment causes the work vehicle 10 to travel in a travel region (for example, the farm field F) in the target route travel mode M1 (first travel mode) in which the work vehicle 10 automatically travels along the previously set target route R, based on the positioning information of the work vehicle 10; and causes the work vehicle 10 to travel in the travel region in the crop row route travel mode M2 (second travel mode) in which the work vehicle 10 automatically travels along a work object route (crop row route R0) which is set depending on positions of work objects (crops V) arranged in the travel region. Further, the automatic traveling system 1 causes, when a position deviation representing the distance W0 between the current position Pe of the work vehicle 10 and the target route R is equal to or more than the allowable value Tw0 for the first travel mode in the first travel mode, the work vehicle 10 to stop; and causes, when a position deviation representing the distance W1 between the current position Pe of the work vehicle 10 and the work object route is equal to or more than the allowable value Tw1 for the second travel mode in the second travel mode, the work vehicle 10 to stop. Further, the automatic traveling system 1 switches from the first travel mode to the second travel mode or from the second travel mode to the first travel mode. Further, the automatic traveling system 1 changes, when one travel mode of the first travel mode and the second travel mode is switched to the other travel mode, the allowable value for the other travel mode to a second allowable value larger than a first allowable value set for the other travel mode before the travel mode is switched.

Further, in the automatic traveling method according to the present invention, one or more processors execute causing the work vehicle 10 to travel in a travel region in a first travel mode in which the work vehicle 10 automatically travels along a previously set target route, based on positioning information of the work vehicle 10, causing the work vehicle 10 to travel in the travel region in a second travel mode in which the work vehicle 10 automatically travels along a work object route set depending on positions of work objects arranged in the travel region, causing, when a position deviation representing a distance between a current position of the work vehicle 10 and the target route is equal to or more than an allowable value for the first travel mode in the first travel mode, the work vehicle 10 to stop, and causing, when a position deviation representing a distance between the current position of the work vehicle 10 and the work object route is equal to or more than an allowable value for the second travel mode in the second travel mode, the work vehicle 10 to stop, switching from the first travel mode to the second travel mode or from the second travel mode to the first travel mode, and changing, when one travel mode of the first travel mode and the second travel mode is switched to the other travel mode, the allowable value for the other travel mode to a second allowable value larger than a first allowable value set for the other travel mode before the travel mode is switched.

With the above configuration, when the travel mode of the work vehicle 10 is switched, the position deviation of the work vehicle 10 can be made less than the allowable value for the travel mode which is the switching destination by changing the allowable value for the travel mode which is the switching destination to a value larger than the previously set allowable value. As a result, the position deviation of the work vehicle 10 is made equal to or larger than the allowable value, so that it is possible to avoid a situation in which the work vehicle 10 stops. For example, in the situation where the work vehicle 10 enters a region where any crops V are not arranged while the work vehicle 10 automatically travels along the crop row route R0 while detecting crops V (crop row route travel mode M2), it is possible to avoid the work vehicle 10 from stopping due to the position deviation of the work vehicle 10 with respect to the target route R, and to shift to the target route travel mode M1 in which the work vehicle 10 travels along the target route R to continue the automatic travel. Accordingly, the stop operation of the work vehicle 10 due to the position deviation of the work vehicle 10 is suppressed, so that it is possible to prevent the work efficiency from being reduced.

The present invention is not limited to the embodiments described above. In another embodiment of the present invention, the setting processing unit 113 may change the previously set allowable value in the following way. Specifically, the setting processing unit 113 sets the allowable value Tw0', based on the distance W0 (position deviation) between the current position Pe of the work vehicle 10 and the crop row route R0, included in the conditions for setting the crop row route R0 depending on the positions of the crops V. For example, when the distance W0 exceeds a predetermined distance, the travel processing unit 111 fails to accurately estimate the crop row route R0. In this case, the setting processing unit 113 sets the predetermined distance to the allowable value Tw0'. For example, for the predetermined distance of 25 cm, the setting processing unit 113 sets the allowable value Tw0' to 25 cm.

Further, in another embodiment of the present invention, the setting processing unit 113 may set the allowable values Tw0 and Tw0' for the crop row route travel mode M2 to values smaller than the allowable values Tw1 and Tw1' for the target route travel mode M1. As a result, it is possible to make the position accuracy of the work vehicle 10 in the crop row route travel mode M2 higher than the position accuracy of the work vehicle 10 in the target route travel mode M1.

Further, the setting processing unit 113 may set the allowable values Tw0, Tw0', Tw1, and Tw1', based on the size of the work vehicle 10, the type and size of a work machine, the condition of the farm field F (inclination, soil, etc.), the traveling speed of the work vehicle 10, and/or the like.

### REFERENCE SIGNS LIST

1...Automatic traveling system
10...Work vehicle
11... Vehicle control device
111...Travel processing unit
112...Switching processing unit
113...Setting processing unit
14...Spray device
16...Positioning device
17...Obstacle detection device
20...Operation terminal
211...Setting processing unit
212...Route generation processing unit
213...Output processing unit
40...Base station
50... Satellite
F...Farm field (travel region)
R...Target route
R0...Crop row route
V...Crop (work object)
Vr...Crop row
Pe Current position
M1...Target route travel mode (first travel mode)
M2...Crop row route travel mode (second travel mode)
W0...Distance (from crop row route) (position deviation)
W1...Distance (from target route) (position deviation)
TwO... Allowable value (first allowable value)
Tw0'...Allowable value (second allowable value)
Tw1...Allowable value (first allowable value)
Tw1'...Allowable value (second allowable value)

## Claims

1. An automatic traveling method comprising:
causing a work vehicle (10) to travel in a travel region in a first travel mode (M1) in which the work vehicle (10) automatically travels along a target route previously set, based on positioning information of the work vehicle (10);
causing the work vehicle (10) to travel in a second travel mode (M2) in which the work vehicle (10) automatically travels along a work object route set depending on positions of work objects arranged in the travel region;
causing, if a position deviation representing a distance between a current position of the work vehicle (10) and the target route is equal to or more than an allowable value for the first travel mode (M1) in the first travel mode (M1), the work vehicle (10) to stop, and causing, if a position deviation representing a distance between the current position of the work vehicle (10) and the work object route is equal to or more than an allowable value for the second travel mode (M2) in the second travel mode (M2), the work vehicle (10) to stop;
switching from the first travel mode (M1) to the second travel mode (M2) or from the second travel mode (M2) to the first travel mode (M1); and
changing, if one travel mode of the first travel mode (M1) and the second travel mode (M2) is switched to the other travel mode, the allowable value for the other travel mode to a second allowable value larger than a first allowable value set for the other travel mode before the travel mode is switched.

2. The automatic traveling method according to claim 1, wherein the allowable value for the other travel mode is changed from the second allowable value to the first allowable value if the position deviation is less than the first allowable value after the one travel mode is switched to the other travel mode and then the work vehicle (10) starts traveling in the other travel mode.

3. The automatic traveling method according to claim 2, wherein the allowable value for the other travel mode is changed from the second allowable value to the first allowable value if the position deviation is less than a predetermined value smaller than the first allowable value after the one travel mode is switched to the other travel mode and then the work vehicle (10) starts traveling in the other travel mode.

4. The automatic traveling method according to any one of claims 1 to 3, wherein the allowable value for the other travel mode is changed from the second allowable value to the first allowable value if a predetermined time is elapsed since the one travel mode is switched to the other travel mode and then the work vehicle (10) starts traveling in the other travel mode.

5. The automatic traveling method according to any one of claims 1 to 4, wherein the work vehicle (10) is stopped if the position deviation is equal to or more than the second allowable value at the time when the one travel mode is switched to the other travel mode.

6. The automatic traveling method according to any one of claims 1 to 5, wherein the second allowable value is set based on the position deviation between the current position of the work vehicle (10) and the work objects, the position deviation being included in conditions for setting the work object route depending on the positions of the work objects.

7. The automatic traveling method according to any one of claims 1 to 6, further comprising:
switching, if the work vehicle (10) detects the work objects while traveling in the first travel mode (M1), the first travel mode (M1) to the second travel mode (M2); and
switching, if the work vehicle (10) does not detect the work objects while traveling in the second travel mode (M2), the second travel mode (M2) to the first travel mode (M1).

8. The automatic traveling method according to any one of claims 1 to 7, further comprising:
causing the work vehicle (10) to automatically travel in the first travel mode (M1) in a region not arranged with the work objects in the travel region; and
causing the work vehicle (10) to automatically travel in the second travel mode (M2) in a region arranged with the work objects in the travel region.

9. The automatic traveling method according to any one of claims 1 to 8, wherein the work vehicle (10) is a vehicle capable of performing a spraying work for spraying a spraying material to first work objects and second work objects arranged in each of left and right directions of the first work objects while traveling across the first work objects.

10. An automatic traveling system (1) comprising:
a travel processing unit (111) that
causes a work vehicle (10) to travel in a travel region either in a first travel mode (M1) in which the work vehicle (10) automatically travels along a target route previously set, based on positioning information of the work vehicle (10) or in a second travel mode (M2) in which the work vehicle (10) automatically travels along a work object route set depending on positions of work objects arranged in the travel region,
causes, if a position deviation representing a distance between a current position of the work vehicle (10) and the target route is equal to or more than an allowable value for the first travel mode (M1) in the first travel mode (M1), the work vehicle (10) to stop, and
causes, if a position deviation representing a distance between the current position of the work vehicle (10) and the work object route is equal to or more than an allowable value for the second travel mode (M2) in the second travel mode (M2), the work vehicle (10) to stop;
a switching processing unit (112) that switches from the first travel mode (M1) to the second travel mode (M2) or from the second travel mode (M2) to the first travel mode (M1); and
a setting processing unit (113) that changes, if one travel mode of the first travel mode (M1) and the second travel mode (M2) is switched to the other travel mode, the allowable value for the other travel mode to a second allowable value larger than a first allowable value set for the other travel mode before the travel mode is switched.

11. An automatic traveling program for causing one or more processors to execute:
causing a work vehicle (10) to travel in a travel region in a first travel mode (M1) in which the work vehicle (10) automatically travels along a target route previously set, based on positioning information of the work vehicle (10);
causing the work vehicle (10) to travel in a second travel mode (M2) in which the work vehicle (10) automatically travels along a work object route set depending on positions of work objects arranged in the travel region;
causing, if a position deviation representing a distance between a current position of the work vehicle (10) and the target route is equal to or more than an allowable value for the first travel mode (M1) in the first travel mode (M1), the work vehicle (10) to stop, and causing, if a position deviation representing a distance between the current position of the work vehicle (10) and the work object route is equal to or more than an allowable value for the second travel mode (M2) in the second travel mode (M2), the work vehicle (10) to stop;
switching from the first travel mode (M1) to the second travel mode (M2) or from the second travel mode (M2) to the first travel mode (M1); and
changing, if one travel mode of the first travel mode (M1) and the second travel mode (M2) is switched to the other travel mode, the allowable value for the other travel mode to a second allowable value larger than a first allowable value set for the other travel mode before the travel mode is switched.

## Patentansprüche

1. Automatisches Fahrverfahren, das Folgendes umfasst:
Veranlassen eines Arbeitsfahrzeugs (10), auf Basis von Positionsbestimmungsinformationen des Arbeitsfahrzeugs (10) in einer Fahrregion in einem ersten Fahrmodus (M1) zu fahren, in dem das Arbeitsfahrzeug (10) automatisch entlang einer zuvor eingestellten Zielroute fährt;
Veranlassen des Arbeitsfahrzeugs (10), in einem zweiten Fahrmodus (M2) zu fahren, in dem das Arbeitsfahrzeug (10) automatisch entlang einer Arbeitsobjektroute fährt, die in Abhängigkeit von Positionen von Arbeitsobjekten eingestellt ist, die in der Fahrregion angeordnet sind;
wenn eine Positionsabweichung, die einen Abstand zwischen einer aktuellen Position des Arbeitsfahrzeugs (10) und der Zielroute repräsentiert, im ersten Fahrmodus (M1) gleich oder größer als ein zulässiger Wert für den ersten Fahrmodus (M1) ist, Veranlassen des Arbeitsfahrzeugs (10) zu stoppen, und wenn eine Positionsabweichung, die einen Abstand zwischen der aktuellen Position des Arbeitsfahrzeugs (10) und der Arbeitsobjektroute repräsentiert, im zweiten Fahrmodus (M2) gleich oder größer als ein zulässiger Wert für den zweiten Fahrmodus (M2) ist, Veranlassen des Arbeitsfahrzeugs (10) zu stoppen;
Umschalten vom ersten Fahrmodus (M1) in den zweiten Fahrmodus (M2) oder vom zweiten Fahrmodus (M2) in den ersten Fahrmodus (M1); und
wenn ein Fahrmodus des ersten Fahrmodus (M1) und des zweiten Fahrmodus (M2) in den anderen Fahrmodus umgeschaltet wird, Ändern des zulässigen Wertes für den anderen Fahrmodus in einen zweiten zulässigen Wert, der größer ist als der erste zulässige Wert, der für den anderen Fahrmodus eingestellt ist, bevor der Fahrmodus umgeschaltet wird.

2. Automatisches Fahrverfahren nach Anspruch 1, wobei der zulässige Wert für den anderen Fahrmodus vom zweiten zulässigen Wert in den ersten zulässigen Wert geändert wird, wenn die Positionsabweichung kleiner ist als der erste zulässige Wert, nachdem der eine Fahrmodus in den anderen Fahrmodus umgeschaltet wurde und das Arbeitsfahrzeug (10) dann mit dem Fahren im anderen Fahrmodus beginnt.

3. Automatisches Fahrverfahren nach Anspruch 2, wobei der zulässige Wert für den anderen Fahrmodus vom zweiten zulässigen Wert in den ersten zulässigen Wert geändert wird, wenn die Positionsabweichung kleiner ist als ein vorbestimmter Wert ist, der kleiner ist als der erste zulässige Wert, nachdem der eine Fahrmodus in den anderen Fahrmodus umgeschaltet wurde und das Arbeitsfahrzeug (10) dann mit dem Fahren im anderen Fahrmodus beginnt.

4. Automatisches Fahrverfahren nach einem der Ansprüche 1 bis 3, wobei der zulässige Wert für den anderen Fahrmodus vom zweiten zulässigen Wert in den ersten zulässigen Wert geändert wird, wenn eine vorbestimmte Zeit vergangen ist, seitdem der eine Fahrmodus in den anderen Fahrmodus umgeschaltet wurde, und das Arbeitsfahrzeug (10) dann mit dem Fahren im anderen Fahrmodus beginnt.

5. Automatisches Fahrverfahren nach einem der Ansprüche 1 bis 4, wobei das Arbeitsfahrzeug (10) gestoppt wird, wenn die Positionsabweichung zu der Zeit, zu der der eine Fahrmodus in den anderen Fahrmodus umgeschaltet wird, gleich oder größer als der zweite zulässige Wert ist.

6. Automatisches Fahrverfahren nach einem der Ansprüche 1 bis 5, wobei der zweite zulässige Wert auf Basis der Positionsabweichung zwischen der aktuellen Position des Arbeitsfahrzeugs (10) und den Arbeitsobjekten eingestellt wird, wobei die Positionsabweichung in Bedingungen zum Einstellen der Arbeitsobjektroute in Abhängigkeit von den Positionen der Arbeitsobjekte beinhaltet ist.

7. Automatisches Fahrverfahren nach einem der Ansprüche 1 bis 6, das ferner Folgendes umfasst:
Umschalten des ersten Fahrmodus (M1) in den zweiten Fahrmodus (M2), wenn das Arbeitsfahrzeug (10) die Arbeitsobjekte detektiert, während es im ersten Fahrmodus (M1) fährt; und
Umschalten des zweiten Fahrmodus (M2) in den ersten Fahrmodus (M1), wenn das Arbeitsfahrzeug (10) die Arbeitsobjekte nicht detektiert, während es im zweiten Fahrmodus (M2) fährt.

8. Automatisches Fahrverfahren nach einem der Ansprüche 1 bis 7, das ferner Folgendes umfasst:
Veranlassen des Arbeitsfahrzeugs (10), in einer Region, in der keine Arbeitsobjekte in der Fahrregion angeordnet sind, automatisch im ersten Fahrmodus (M1) zu fahren; und
Veranlassen des Arbeitsfahrzeugs (10), in einer Region, in der Arbeitsobjekte in der Fahrregion angeordnet sind, automatisch im zweiten Fahrmodus (M2) zu fahren.

9. Automatisches Fahrverfahren nach einem der Ansprüche 1 bis 8, wobei das Arbeitsfahrzeug (10) ein Fahrzeug ist, das in der Lage ist, eine Sprüharbeit zum Versprühen eines Sprühmaterials auf erste Arbeitsobjekte und zweite Arbeitsobjekte durchzuführen, die in jeder einer linken und einer rechten Richtung der ersten Arbeitsobjekte angeordnet sind, während über die ersten Arbeitsobjekte gefahren wird.

10. Automatisches Fahrsystem (1), das Folgendes umfasst:
eine Fahrverarbeitungseinheit (111), die
auf Basis von Positionsbestimmungsinformationen eines Arbeitsfahrzeugs (10) das Arbeitsfahrzeug (10) veranlasst, in einer Fahrregion entweder in einem ersten Fahrmodus (M1), zu fahren, in dem das Arbeitsfahrzeug (10) automatisch entlang einer zuvor eingestellten Zielroute fährt, oder in einem zweiten Fahrmodus (M2), in dem das Arbeitsfahrzeug (10) automatisch entlang einer Arbeitsobjektroute fährt, die in Abhängigkeit von Positionen der in der Fahrregion angeordneten Arbeitsobjekte eingestellt wird,
wenn eine Positionsabweichung, die einen Abstand zwischen einer aktuellen Position des Arbeitsfahrzeugs (10) und der Zielroute repräsentiert, im ersten Fahrmodus (M1) gleich oder größer als ein zulässiger Wert für den ersten Fahrmodus (M1) ist, das Arbeitsfahrzeug (10) veranlasst zu stoppen, und
wenn eine Positionsabweichung, die einen Abstand zwischen der aktuellen Position des Arbeitsfahrzeugs (10) und der Arbeitsobjektroute repräsentiert, im zweiten Fahrmodus (M2) gleich oder größer als ein zulässiger Wert für den zweiten Fahrmodus (M2) ist, das Arbeitsfahrzeug (10) veranlasst zu stoppen;
eine Umschaltungsverarbeitungseinheit (112), die vom ersten Fahrmodus (M1) in den zweiten Fahrmodus (M2) oder vom zweiten Fahrmodus (M2) in den ersten Fahrmodus (M1) umschaltet; und
eine Einstellungsverarbeitungseinheit (113), die, wenn ein Fahrmodus des ersten Fahrmodus (M1) und des zweiten Fahrmodus (M2) in den anderen Fahrmodus umgeschaltet wird, den zulässigen Wert für den anderen Fahrmodus in einen zweiten zulässigen Wert ändert, der größer ist als der erste zulässige Wert, der für den anderen Fahrmodus eingestellt ist, bevor der Fahrmodus umgeschaltet wird.

11. Automatisches Fahrprogramm zum Veranlassen von einem oder mehreren Prozessoren, Folgendes auszuführen:
Veranlassen eines Arbeitsfahrzeugs (10), auf Basis von Positionsbestimmungsinformationen des Arbeitsfahrzeugs (10) in einer Fahrregion in einem ersten Fahrmodus (M1) zu fahren, in dem das Arbeitsfahrzeug (10) automatisch entlang einer zuvor eingestellten Zielroute fährt;
Veranlassen des Arbeitsfahrzeugs (10), in einem zweiten Fahrmodus (M2) zu fahren, in dem das Arbeitsfahrzeug (10) automatisch entlang einer Arbeitsobjektroute fährt, die in Abhängigkeit von Positionen von Arbeitsobjekten eingestellt ist, die in der Fahrregion angeordnet sind;
wenn eine Positionsabweichung, die einen Abstand zwischen einer aktuellen Position des Arbeitsfahrzeugs (10) und der Zielroute repräsentiert, im ersten Fahrmodus (M1) gleich oder größer als ein zulässiger Wert für den ersten Fahrmodus (M1) ist, Veranlassen des Arbeitsfahrzeugs (10) zu stoppen, und wenn eine Positionsabweichung, die einen Abstand zwischen der aktuellen Position des Arbeitsfahrzeugs (10) und der Arbeitsobjektroute repräsentiert, im zweiten Fahrmodus (M2) gleich oder größer als ein zulässiger Wert für den zweiten Fahrmodus (M2) ist, Veranlassen des Arbeitsfahrzeugs (10) zu stoppen;
Umschalten vom ersten Fahrmodus (M1) in den zweiten Fahrmodus (M2) oder vom zweiten Fahrmodus (M2) in den ersten Fahrmodus (M1); und
wenn ein Fahrmodus des ersten Fahrmodus (M1) und des zweiten Fahrmodus (M2) in den anderen Fahrmodus umgeschaltet wird, Ändern des zulässigen Wertes für den anderen Fahrmodus in einen zweiten zulässigen Wert, der größer ist als der erste zulässige Wert, der für den anderen Fahrmodus eingestellt ist, bevor der Fahrmodus umgeschaltet wird.

## Revendications

1. Procédé de déplacement automatique comprenant les étapes suivantes :
amener un véhicule de travail (10) à se déplacer dans une région de déplacement dans un premier mode de déplacement (M1) dans lequel le véhicule de travail (10) se déplace automatiquement le long d'un itinéraire cible préalablement défini sur la base d'informations de position du véhicule de travail (10) ;
amener le véhicule de travail (10) à se déplacer dans un deuxième mode de déplacement (M2) dans lequel le véhicule de travail (10) se déplace automatiquement le long d'un itinéraire d'objet de travail défini en fonction des positions d'objets de travail agencés dans la région de déplacement ;
amener le véhicule de travail (10) à s'arrêter si un écart de position représentant une distance entre une position actuelle du véhicule de travail (10) et l'itinéraire cible est égal ou supérieur à une valeur admissible pour le premier mode de déplacement (M1) dans le premier mode de déplacement (M1), et amener le véhicule de travail (10) à s'arrêter si un écart de position représentant une distance entre la position actuelle du véhicule de travail (10) et l'itinéraire d'objet de travail est égal ou supérieur à une valeur admissible pour le deuxième mode de déplacement (M2) dans le deuxième mode de déplacement (M2) ;
effectuer une commutation du premier mode de déplacement (M1) au deuxième mode de déplacement (M2) ou du deuxième mode de déplacement (M2) au premier mode de déplacement (M1) ; et
si un mode de déplacement du premier mode de déplacement (M1) et du deuxième mode de déplacement (M2) est commuté à l'autre mode de déplacement, faire passer la valeur admissible pour l'autre mode de déplacement à une deuxième valeur admissible supérieure à une première valeur admissible définie pour l'autre mode de déplacement avant la commutation du mode de déplacement.

2. Procédé de déplacement automatique selon la revendication 1, dans lequel la valeur admissible pour l'autre mode de déplacement passe de la deuxième valeur admissible à la première valeur admissible si l'écart de position est inférieur à la première valeur admissible après la commutation du premier mode de déplacement à l'autre mode de déplacement, puis le véhicule de travail (10) commence à se déplacer dans l'autre mode de déplacement.

3. Procédé de déplacement automatique selon la revendication 2, dans lequel la valeur admissible pour l'autre mode de déplacement passe de la deuxième valeur admissible à la première valeur admissible si l'écart de position est inférieur à une valeur prédéterminée plus petite que la première valeur admissible après la commutation du premier mode de déplacement à l'autre mode de déplacement, puis le véhicule de travail (10) commence à se déplacer dans l'autre mode de déplacement.

4. Procédé de déplacement automatique selon l'une des revendications 1 à 3, dans lequel la valeur admissible pour l'autre mode de déplacement passe de la deuxième valeur admissible à la première valeur admissible si un temps prédéterminé s'est écoulé depuis la commutation du premier mode de déplacement à l'autre mode de déplacement, puis le véhicule de travail (10) commence à se déplacer dans l'autre mode de déplacement.

5. Procédé de déplacement automatique selon l'une des revendications 1 à 4, dans lequel le véhicule de travail (10) est arrêté si l'écart de position est égal ou supérieur à la deuxième valeur admissible au moment de la commutation du premier mode de déplacement à l'autre mode de déplacement.

6. Procédé de déplacement automatique selon l'une des revendications 1 à 5, dans lequel la deuxième valeur admissible est définie sur la base de l'écart de position entre la position actuelle du véhicule de travail (10) et les objets de travail, l'écart de position étant inclus dans des conditions de définition de l'itinéraire d'objet de travail en fonction des positions des objets de travail.

7. Procédé de déplacement automatique selon l'une des revendications 1 à 6, comprenant en outre :
si le véhicule de travail (10) détecte les objets de travail pendant qu'il se déplace dans le premier mode de déplacement (M1), effectuer une commutation du premier mode de déplacement (M1) au deuxième mode de déplacement (M2) ; et
si le véhicule de travail (10) ne détecte pas les objets de travail pendant qu'il se déplace dans le deuxième mode de déplacement (M2), effectuer une commutation du deuxième mode de déplacement (M2) au premier mode de déplacement (M1).

8. Procédé de déplacement automatique selon l'une des revendications 1 à 7, comprenant en outre les étapes suivantes :
amener le véhicule de travail (10) à se déplacer automatiquement dans le premier mode de déplacement (M1) dans une région où aucun objet de travail n'est agencé dans la région de déplacement ; et
amener le véhicule de travail (10) à se déplacer automatiquement dans le deuxième mode de déplacement (M2) dans une région où les objets de travail sont agencés dans la région de déplacement.

9. Procédé de déplacement automatique selon l'une des revendications 1 à 8, dans lequel le véhicule de travail (10) est un véhicule capable d'effectuer un travail de pulvérisation pour pulvériser un matériau de pulvérisation sur les premiers objets de travail et les deuxièmes objets de travail agencés dans chacune des directions gauche et droite des premiers objets de travail pendant qu'il se déplace à travers les premiers objets de travail.

10. Système de déplacement automatique (1) comprenant :
une unité de traitement des déplacement (111) qui
amène un véhicule de travail (10) à se déplacer dans une région de déplacement, soit dans un premier mode de déplacement (M1) dans lequel le véhicule de travail (10) se déplace automatiquement le long d'un itinéraire cible préalablement défini sur la base d'informations de position du véhicule de travail (10), soit dans un deuxième mode de déplacement (M2) dans lequel le véhicule de travail (10) se déplace automatiquement le long d'un itinéraire d'objet de travail défini en fonction des positions d'objets de travail agencés dans la région de déplacement,
amène le véhicule de travail (10) à s'arrêter si un écart de position représentant une distance entre une position actuelle du véhicule de travail (10) et l'itinéraire cible est égal ou supérieur à une valeur admissible pour le premier mode de déplacement (M1) dans le premier mode de déplacement (M1), et
amène le véhicule de travail (10) à s'arrêter si un écart de position représentant une distance entre la position actuelle du véhicule de travail (10) et l'itinéraire d'objet de travail est égal ou supérieur à une valeur admissible pour le deuxième mode de déplacement (M2) dans le deuxième mode de déplacement (M2) ;
une unité de traitement de commutation (112) qui effectue la commutation du premier mode de déplacement (M1) au deuxième mode de déplacement (M2) ou du deuxième mode de déplacement (M2) au premier mode de déplacement (M1) ; et
une unité de traitement des réglages (113) qui, si un mode de déplacement du premier mode de déplacement (M1) et du deuxième mode de déplacement (M2) est commuté à l'autre mode de déplacement, fait passer la valeur admissible pour l'autre mode de déplacement à une deuxième valeur admissible supérieure à une première valeur admissible définie pour l'autre mode de déplacement avant la commutation du mode de déplacement.

11. Programme de déplacement automatique pour amener un ou plusieurs processeurs à exécuter ce qui suit :
amener un véhicule de travail (10) à se déplacer dans une région de déplacement dans un premier mode de déplacement (M1) dans lequel le véhicule de travail (10) se déplace automatiquement le long d'un itinéraire cible préalablement défini sur la base d'informations de position du véhicule de travail (10) ;
amener le véhicule de travail (10) à se déplacer dans un deuxième mode de déplacement (M2) dans lequel le véhicule de travail (10) se déplace automatiquement le long d'un itinéraire d'objet de travail défini en fonction des positions d'objets de travail agencés dans la région de déplacement ;
amener le véhicule de travail (10) à s'arrêter si un écart de position représentant une distance entre une position actuelle du véhicule de travail (10) et l'itinéraire cible est égal ou supérieur à une valeur admissible pour le premier mode de déplacement (M1) dans le premier mode de déplacement (M1), et amener le véhicule de travail (10) à s'arrêter si un écart de position représentant une distance entre la position actuelle du véhicule de travail (10) et l'itinéraire d'objet de travail est égal ou supérieur à une valeur admissible pour le deuxième mode de déplacement (M2) dans le deuxième mode de déplacement (M2), ;
effectuer une commutation du premier mode de déplacement (M1) au deuxième mode de déplacement (M2) ou du deuxième mode de déplacement (M2) au premier mode de déplacement (M1) ; et
si un mode de déplacement du premier mode de déplacement (M1) et du deuxième mode de déplacement (M2) est commuté à l'autre mode de déplacement, faire passer la valeur admissible pour l'autre mode de déplacement à une deuxième valeur admissible supérieure à une première valeur admissible définie pour l'autre mode de déplacement avant la commutation du mode de déplacement.
